# EUROPÄISCHE PATENTSCHRIFT

(11) **EP 1 711 392 B1**
(45) Veröffentlichungstag und Bekanntmachung des Hinweises auf die Patenterteilung: **22.04.2009**
(21) Anmeldenummer: 05701354.2
(22) Anmeldetag: 04.02.2005
(51) Int. Cl.: B62D 5/22

(54) **ZAHNSTANGENLENKUNG, INSBESONDERE FÜR LEICHTERE LASTKRAFTFAHRZEUGE**
RACK-AND-PINION STEERING SYSTEM, PARTICULARLY FOR LIGHTER, GOODS-CARRYING VEHICLES
DIRECTION A CREMAILLERE DESTINEE NOTAMMENT A DES CAMIONS LEGERS

(30) Priorität: 05.02.2004 DE 202004001740 U
(43) Veröffentlichungstag der Anmeldung: 18.10.2006
(73) Patentinhaber: TRW Automotive GmbH, 73553 Alfdorf (DE)
(72) Erfinder: EBERHART, Eugen, 40223 Düsseldorf (DE); HULLMANN, Johannes, 41564 Karst (DE); WATZLAWEK, Gregor, 40547 Düsseldorf (DE)
(74) Vertreter: Prinz & Partner
(86) Internationale Anmeldenummer: PCT/EP2005/001158
(87) Internationale Veröffentlichungsnummer: WO 2005/075276

(56) Entgegenhaltungen:
- DE-A- 2 114 591
- DE-A- 3 118 254
- DE-A- 19 822 313
- FR-A- 2 643 602
- US-B1- 6 457 375

## Beschreibung

Die Erfindung betrifft eine Zahnstangenlenkung, insbesondere für leichtere Kraftfahrzeuge, nach dem Oberbegriff des Anspruchs 1.

Aus Kostengründen wird mittlerweile bei Lastkraftwaren mit einer Vorderachslast von bis ca. 6 Tonnen der Einsatz von Zahnstangenlenkungen forciert. Dabei stellt sich das Problem, daß bedingt durch die hohen Zahnstangenkräfte von bis zu 60 kN und dem großen Hub von bis über 125 mm besondere Belastungen auf die Zahnstange wirken.

Die FR 2 643 602 A zeigt Spurstangen, die an einem Abtriebselement befestigt sind. Das Abtriebselement umgreift einen Kolben, der Teil einer Servoeinheit ist.

Aus der gattungsbildenden DE 2 114 591 A ist eine Zahnstangenlenkung mit Spurstangen bekannt, die über Kugelzapfen an einer Zahnstange befestigt sind.

Zur Verringerung der durch die hohen Belastungen auftretenden Probleme ist erfingsgemäß eine Zahnstangenlenkung mit den Merkmalen des Anspruchs 1 vorgesehen. Eine solche Zahnstangenlenkung mit sogenanntem Mittenabgriff hat sich als besonders vorteilhaft bei den auftretenden hohen Belastungen herausgestellt, insbesondere weil ein symmetrischer oder wenigstens nahezu symmetrischer Aufbau erzielt werden kann.

Erfindungsgemäß ist vorgesehen, daß das Abtriebselement ein Gleitschuh ist, der im Gehäuse angeordnet ist. Ein solcher Gleitschuh kann dazu verwendet werden, die auftretenden Querkräfte unmittelbar in das Gehäuse einzuleiten, so daß eine Zahnstange mit geringeren Abmessungen verwendet werden kann. Würden nämlich die auftretenden Querkräfte unmittelbar auf die Zahnstange übertragen, müßte diese sehr viel größer dimensioniert werden, insbesondere mit größerem Durchmesser, um den auftretenden Belastungen standhalten zu können. Eine derart groß dimensionierte Zahnstange würde jedoch zu erheblichen Kosten und zu einem sehr hohen Gewicht der Zahnstangenlenkung führen.

Gemäß einer bevorzugten Ausführungsform der Erfindung ist auch vorgesehen, daß das Gehäuse einen Faltenbalg aufweist, der das Gehäuse an dem Ende abschließt, an dem die Zahnstange angeordnet ist. Auf diese Weise kann das eigentliche Gehäuse sehr viel kürzer als üblicherweise ausgeführt werden, was größere Freiheiten hinsichtlich der Anordnung der Zahnstangenlenkung bringt. Insbesondere besteht nicht die Gefahr, daß das Gehäuse in den Raum hineinragt, in den hinein eines der lenkbaren Fahrzeugräder hineinschwenken kann.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 eine Unteransicht einer erfindungsgemäßen Lenkung;
- Figur 2 einen schematischen Schnitt durch das Gehäuse der Lenkung von Figur 1; und
- Figur 3 vergrößert einen Ausschnitt von Figur 2.

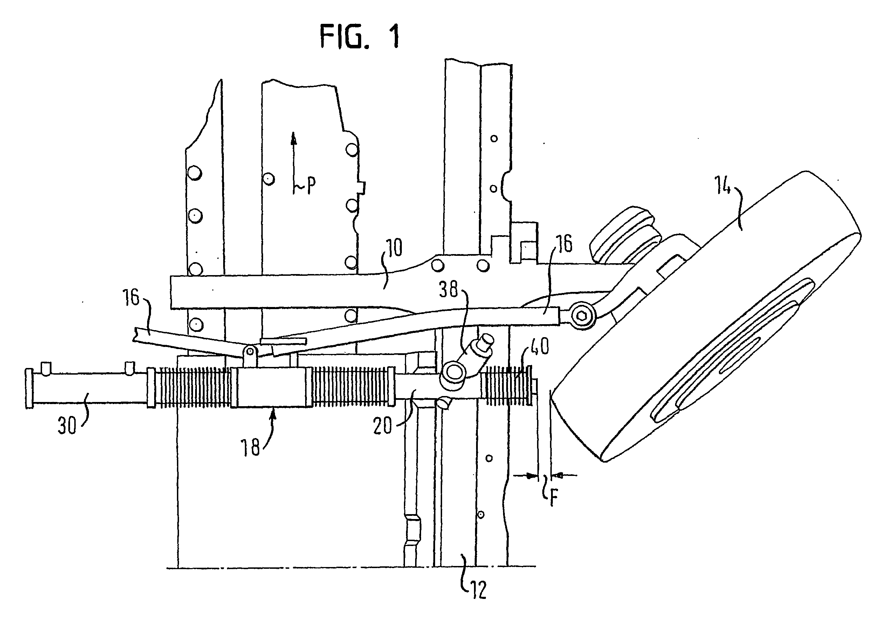

Figur 1 zeigt eine Vorderachse 10 eines Lastkraftwagens, von dem hier als wesentliches Bauteil ein Rahmen 12 gezeigt ist. An der Vorderachse 10 ist ein lenkbares Fahrzeugrad 14 angebracht, das über eine Spurstange 16 mit einer Zahnstangenlenkung 18 verbunden ist. Die Zahnstangenlenkung 18 ist fest relativ zum Rahmen 12 angebracht. Mit dem Pfeil P ist die Fahrtrichtung bezeichnet.

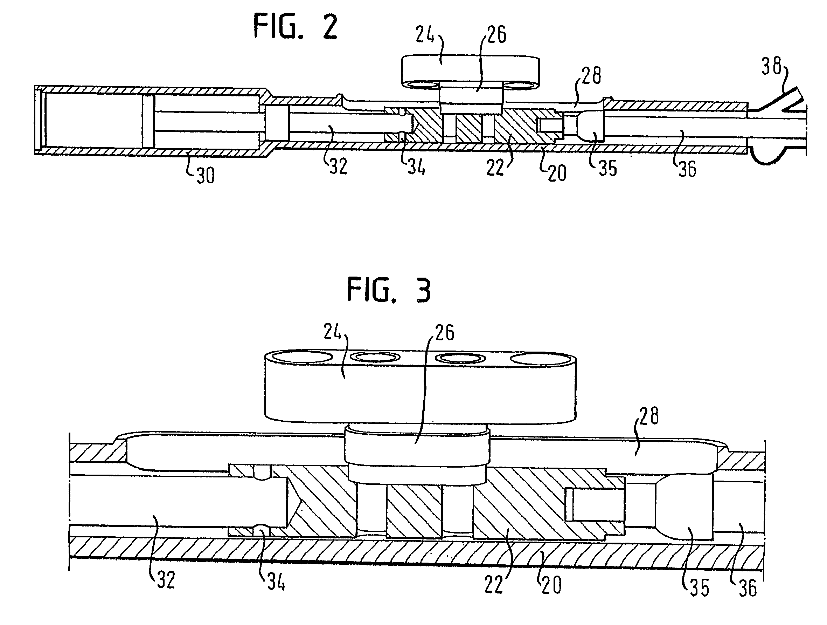

Die Zahnstangenlenkung 18 (siehe Figur 2) weist ein Gehäuse 20 auf, in welchem ein Gleitschuh 22 translatorisch verschiebbar angeordnet ist. Mit dem Gleitschuh 22 ist ein Anschlußelement 24 verbunden, an dem die beiden Spurstangen 16 angebracht werden. Das Anschlußelement 24 weist einen Lagerabschnitt 26 auf, der an zwei Abstützflächen 28 anliegt, die als Ränder eines Schlitzes im Gehäuse 20 ausgebildet sind. Der Lagerabschnitt 26 ist als Gleitlager ausgeführt, so daß er mit geringer Reibung an den Abstützflächen 28 gleitet.

An dem bezüglich Figur 1 linken Ende des Gehäuses 20 ist eine Servoeinheit 30 angeordnet, die als Hydraulikzylinder ausgeführt ist. Der Hydraulikzylinder weist eine Kolbenstange 32 auf, die durch eine Verstiftung 34 mit dem Gleitschuh 22 verbunden ist.

Auf der zur Servoeinheit 30 entgegengesetzten Seite des Gleitschuhs 22 ist eine Zahnstange 36 angeordnet, die durch ein Kugelgelenk 35 mit dem Gleitschuh 22 verbunden ist. An der Zahnstange 36 greift ein (nicht dargestelltes) Ritzel an, welches in einem Getriebegehäuse 38 angeordnet ist. Das Ritzel ist mit dem Lenkrad des Fahrzeugs verbunden.

Auf der Seite des Lenkgetriebes 38 ist das Gehäuse 20 kürzer ausgeführt, als dies notwendig wäre, um die Zahnstange 36 in jeder ihrer Positionen aufzunehmen. Den Abschluß des Gehäuses bildet ein Faltenbalg 40, der am Gehäuse angebracht ist und von der Zahnstange, wenn diese bezüglich Figur 1 nach rechts verstellt wird, von der Stirnseite der Zahnstange nach rechts verschoben wird. Wenn die Zahnstange wieder nach links verschoben wird, stellt sich der Faltenbalg 40 aufgrund der Fixierung an der Zahnstange automatisch wieder nach links zurück. Der Faltenbalg 40 kann also als variabler Teil des Gehäuses 20 angesehen werden, der nur dann große Abmessungen einnimmt, wenn dies erforderlich ist. Auf diese Weise ist gewährleistet, daß bei vollständigem Einschlag des Rades 14 für eine Linkskurve ein Freiraum F zwischen dem Rad und dem Ende des Gehäuses 20 vorliegt.

Die beschriebene Zahnstangenlenkung bietet die folgenden Vorteile: Durch die Anordnung des Gleitstücks mittig zwischen den beiden Fahrzeugrädern ergibt sich eine symmetrische Anordnung der beiden Spurstangen 16. Sämtliche Kippkräfte, die von den beiden Spurstangen über das Anschlußelement 24 auf die Lenkung übertragen werden, werden über den Lagerabschnitt 26 des Anschlußelementes 24 und die Abstützfläche 28 des Gehäuses 20 in die Lenkung eingeleitet. Dies verhindert, daß diese Kräfte auf die Zahnstange 36 einwirken, die somit nur im wesentlichen im Hinblick auf die in Längsrichtung wirkenden Belastungen dimensioniert werden muß. Die Verwendung des Kugelgelenks 35 zum Anbinden der Zahnstange 36 an den Gleitschuh 22 gewährleistet zusätzlich, daß die Zahnstange nicht mit Querkräften beaufschlagt wird. Die Verwendung des Faltenbalgs führt zu einer besonders kompakten Zahnstangenlenkung, so daß sich große Freiheiten bei der Anordnung der Zahnstangenlenkung am Fahrzeug ergeben.

## Patentansprüche

1. Zahnstangenlenkung, insbesondere für leichtere Lastkraftfahrzeuge, mit einem Gehäuse (20), einer Zahnstange (36), einem Abtriebselement (22) und einer Servoeinheit (30), wobei das Abtriebselement (22) zwischen der Zahnstange (36) und der Servoeinheit (30) angeordnet ist,
**dadurch gekennzeichnet, daß**
das Abtriebselement (22) ein Gleitschuh (22) ist, der im Gehäuse (20) angeordnet ist,
wobei der Gleitschuh (22) durch ein Kugelgelenk (35) mit der Zahnstange (36) verbunden ist.

2. Zahnstangenlenkung nach Anspruch 1, **dadurch gekennzeichnet, daß** der Gleitschuh (22) mit einem Anschlußelement (24) verbunden ist, das außerhalb des Gehäuses (20) angeordnet ist.

3. Zahnstangenlenkung nach Anspruch 2, **dadurch gekennzeichnet, daß** das Gehäuse (20) mit mindestens einer Abstützfläche (28) versehen ist und daß das Anschlußelement (24) mit einem Lagerabschnitt (26) versehen ist, der sich an der Abstützfläche (28) abstützt, so daß Kippkräfte aufgenommen werden können.

4. Zahnstangenlenkung nach Anspruch 2 oder Anspruch 3, **dadurch gekennzeichnet, daß** zwei Spurstangen (16) am Anschlußelement (24) angebracht sind.

5. Zahnstangenlenkung nach einem der vorhergehenden Ansprüche, **dadurch gekennzeichnet, daß** das Gehäuse (20) einen Faltenbalg (40) aufweist, der das Gehäuse (20) an dem Ende abschließt, an dem die Zahnstange (36) angeordnet ist.

6. Zahnstangenlenkung nach Anspruch 5, **dadurch gekennzeichnet, daß** der Faltenbalg (40), wenn die Zahnstange (36) aus dem Ende des Gehäuse (20) hinausbewegt wird, von der vom Gleitschuh (22) abgewandten Stirnseite der Zahnstange (36) mitgenommen wird und sich, wenn die Zahnstange (36) wieder in das Gehäuse (20) zurückgefahren wird, durch die Verbindung mit der Zahnstange wieder zum Gehäuse (20) hin zusammenzieht.

7. Zahnstangenlenkung nach einem der vorhergehenden Ansprüche, **dadurch gekennzeichnet, daß** die Servoeinheit ein hydraulischer Stellzylinder (30) ist.

## Claims

1. A rack-and-pinion steering system, in particular for lighter commercial vehicles, comprising a housing (20), a toothed rack (36), a driven element (22) and a servo unit (30), the driven element (22) being arranged between the toothed rack (36) and the servo unit (30),
**characterized in that**
the driven element (22) is a sliding block (22) arranged in the housing (20),
the sliding block (22) being connected to the toothed rack (36) by a ball joint (35).

2. The rack-and-pinion steering system according to claim 1, **characterized in that** the sliding block (22) is connected to a connecting element (24) which is arranged outside the housing (20).

3. The rack-and-pinion steering system according to claim 2, **characterized in that** the housing (20) is provided with at least one supporting surface (28) and that the connecting element (24) is provided with a bearing section (26) resting against the supporting surface (28) so that tilting forces can be taken up.

4. The rack-and-pinion steering system according to claim 2 or claim 3, **characterized in that** two tie rods (16) are attached to the connecting element (24).

5. The rack-and-pinion steering system according to any of the preceding claims, **characterized in that** the housing (20) includes an expansion bellows (40) closing off the housing (20) at that end at which the toothed rack (36) is arranged.

6. The rack-and-pinion steering system according to claim 5, **characterized in that** when the toothed rack (36) is moved out of the end of the housing (20), the expansion bellows (40) is entrained by the front face of the toothed rack (36) facing away from the sliding block (22) and, when the toothed rack (36) is retracted into the housing (20), the expansion bellows (40) contracts again towards the housing (20) due to the connection to the toothed rack.

7. The rack-and-pinion steering system according to any of the preceding claims, **characterized in that** the servo unit is a hydraulic actuating cylinder (30).

## Revendications

1. Direction à crémaillère destinée en particulier à des camions légers, comportant un boîtier (20), une crémaillère (36), un élément entraîné (22) et un servomécanisme (30), l'élément entraîné (22) étant agencé entre la crémaillère (36) et le servomécanisme (30),
**caractérisée en ce que**
l'élément entraîné (22) est un patin de guidage (22) qui est agencé dans le boîtier (20),
le patin de guidage (22) étant relié à la crémaillère (36) par un joint sphérique (35).

2. Direction à crémaillère selon la revendication 1, **caractérisée en ce que** le patin de guidage (22) est relié à un élément de raccordement (24) qui est agencé en dehors du boîtier (20).

3. Direction à crémaillère selon la revendication 2, **caractérisée en ce que** le boîtier (20) est pourvu d'au moins une surface d'appui (28) et **en ce que** l'élément de raccordement (24) est pourvu d'un tronçon de palier (26) qui prend appui sur la surface d'appui (28) de telle sorte que des forces de basculement peuvent être encaissées.

4. Direction à crémaillère selon la revendication 2 ou la revendication 3, **caractérisée en ce que** deux barres d'accouplement (16) sont montées sur l'élément de raccordement (24).

5. Direction à crémaillère selon l'une des revendications précédentes, **caractérisée en ce que** le boîtier (20) présente un soufflet (40) qui ferme le boîtier (20) à l'extrémité à laquelle est agencée la crémaillère (36).

6. Direction à crémaillère selon la revendication 5, **caractérisée en ce que** lorsque la crémaillère (36) est sortie hors de l'extrémité du boîtier (20), le soufflet (40) est entraîné par la face frontale de la crémaillère (36), qui est détournée du patin de guidage (22), et lorsque la crémaillère (36) est de nouveau rentrée dans le boîtier (20), le soufflet se contracte de nouveau vers le boîtier (20) en raison de la liaison avec la crémaillère.

7. Direction à crémaillère selon l'une des revendications précédentes, **caractérisée en ce que** le servomécanisme est un vérin hydraulique (30).
